# FASCICULE DE BREVET EUROPEEN

(11) **EP 1 484 206 B1**
(45) Date de publication et mention de la délivrance du brevet: **16.08.2006**
(21) Numéro de dépôt: 04012016.4
(22) Date de dépôt: 21.05.2004
(51) Int. Cl.: B60H 1/00

(54) **Dispositif de chauffage-ventilation et/ou climatisation à encombrement réduit pour véhicule automobile**
Eine Heizung / Klimaanlage verwendbar für ein flaches Instrumentenbrett eines Fahrzeugs
A heating/air-conditioning device suitable for housing in a vehicle flat instrument panel

(30) Priorité: 02.06.2003 FR 0306627
(43) Date de publication de la demande: 08.12.2004
(73) Titulaire: VALEO SYSTEMES THERMIQUES, 78320 Le Mesnil Saint-Denis (FR)
(72) Inventeur: Passebecq, Ghislain, 78640 Neauphle le Vieux (FR); Hullot, Thierry, 78530 Buc (FR)

(56) Documents cités:
- EP-A- 0 214 605
- EP-A- 1 013 489
- FR-A- 2 756 802
- FR-A- 2 773 113
- FR-A- 2 852 894
- US-A- 4 459 466
- US-A- 4 829 884

## Description

L'invention se rapporte aux équipements des véhicules automobiles.

Elle concerne plus particulièrement un dispositif de chauffage-ventilation et/ou climatisation de l'habitacle d'un véhicule automobile.

Un tel dispositif comprend, pour l'essentiel, un pulseur d'air (ou soufflante) alimenté par de l'air extérieur prélevé hors de l'habitacle du véhicule et/ou de l'air recirculé prélevé à l'intérieur de l'habitacle. Ce flux d'air est envoyé ensuite à travers au moins un échangeur de chaleur pour produire un flux d'air à température ajustée qui est envoyé dans l'habitacle par l'intermédiaire de différentes sorties d'air. Ces sorties d'air comprennent le plus souvent des aérateurs placés sur la planche de bord, des buses de dégivrage/désembuage du pare-brise, des buses orientées vers la partie inférieure de l'habitacle dans la région des pieds des passagers, et éventuellement des buses placées à la partie arrière de l'habitacle.

Généralement, le flux d'air à traiter traverse successivement un évaporateur relié à un circuit classique de climatisation puis un ou plusieurs radiateurs de chauffage.

Le plus souvent, un tel dispositif de chauffage-ventilation et/ou climatisation comprend un boîtier agencé pour être placé en position centrale, habituellement sous la planche de bord, dans le compartiment moteur ou dans l'habitacle. A partir de ce boîtier sont issues différents conduits qui alimentent les sorties d'air.

De tels dispositifs ont pour inconvénient principal de présenter un encombrement relativement important et de convenir essentiellement aux véhicules d'architecture traditionnelle.

Or, la tendance veut actuellement que l'on s'oriente vers des véhicules d'architectures différentes, notamment vers des véhicules dépourvus de console centrale.

L'invention a notamment pour but de surmonter les inconvénients précités.

Elle vise en particulier à procurer un dispositif de chauffage-ventilation et/ou climatisation de l'habitacle d'un véhicule automobile, qui présente une structure essentiellement linéaire, comme décrit dans le document EP 1013489.

L'invention vise aussi à procurer un tel dispositif qui peut être utilisé dans des véhicules dépourvus de console centrale.

Elle vise encore à procurer un tel dispositif qui peut s'implanter essentiellement dans la planche de bord d'un véhicule automobile.

L'invention propose à cet effet un dispositif de chauffage-ventilation et/ou climatisation de l'habitacle d'un véhicule automobile, lequel comprend un boîtier de forme allongée propre à être implanté à l'avant de l'habitacle, une cloison agencée dans le boîtier pour y définir un premier conduit et un second conduit s'étendant entre les deux extrémités du boîtier, une unité de production d'air froid agencée pour produire un flux d'air froid et l'envoyer dans le premier conduit, au moins un radiateur de chauffage placé à l'interface du premier conduit et du second conduit et agencé pour être traversé par une partie au moins du flux d'air froid et produire ainsi un flux d'air chaud dans le second conduit, des sorties d'air aménagées dans le boîtier à l'interface du premier conduit et du second conduit, et des volets de distribution associés aux sorties d'air.

Ainsi, le dispositif de l'invention comprend un boîtier de forme allongée, présentant une architecture originale, qui peut être placé transversalement et horizontalement à l'avant de l'habitacle, en occupant tout ou partie de la planche de bord. Il peut ainsi être implanté dans un véhicule automobile dépourvu de console centrale.

Le boîtier est divisé, par une cloison, en deux conduits adjacents, un premier conduit destiné à être alimenté par de l'air froid et un second conduit destiné à être alimenté par de l'air chaud, cet air chaud étant obtenu par échauffement, par l'intermédiaire d'au moins un radiateur, d'une partie du flux d'air froid prélevée dans le premier conduit.

Des sorties d'air sont aménagées directement dans le boîtier et sont contrôlées à chaque fois par des volets de distribution pour ajuster le débit d'air au niveau de chaque sortie.

Il en résulte un dispositif peu encombrant d'architecture linéaire qui peut s'implanter dans un véhicule dépourvu de console centrale et qui peut être réalisé suivant différentes versions, en fonction du type de véhicule à équiper.

Dans une forme de réalisation simplifiée, le dispositif comprend un seul radiateur de chauffage placé à une extrémité du boîtier, ou bien encore en position centrale dans le boîtier. En ce cas, il est avantageux de prévoir en outre au moins un volet d'équilibrage placé dans le premier conduit et à proximité du radiateur de chauffage pour améliorer l'équilibrage entre le flux d'air froid et le flux d'air chaud.

Dans une forme de réalisation plus évoluée, le dispositif comprend deux radiateurs de chauffage placés respectivement aux deux extrémités du boîtier, ou bien encore en position centrale dans le boîtier.

Différents types de radiateurs de chauffage peuvent être utilisés dans le dispositif de l'invention.

Dans un premier cas, le radiateur de chauffage est agencé pour produire un flux d'air chaud à température non réglable, au moins un volet de mixage étant alors placé devant les sorties d'air à l'interface entre le premier conduit et le second conduit pour ajuster la proportion entre le flux d'air froid et le flux d'air chaud et produire un flux d'air à température ajustée aux différentes sorties.

En ce cas, l'un au moins des volets de mixage peut être intégré dans le boîtier, ou bien être intégré à un module de diffusion d'air rapporté extérieurement sur le boîtier et intégrant un volet de distribution.

Dans ce premier cas, le radiateur de chauffage est avantageusement un échangeur de chaleur traversé par un fluide chaud, en particulier par le liquide de refroidissement du moteur du véhicule.

Dans un deuxième cas, le radiateur de chauffage est agencé pour produire un flux d'air chaud à température réglable.

En ce cas, le radiateur de chauffage est avantageusement constitué par un échangeur de chaleur traversé par un fluide chaud, à débit réglable, en particulier par le liquide de refroidissement du moteur du véhicule.

Dans tous les cas, on peut prévoir qu'un radiateur additionnel comportant des résistances à coefficient de température positif soit placé à proximité du radiateur de chauffage.

Ceci permet de procurer une chaleur d'appoint ou de procurer l'essentiel de l'énergie thermique, lorsque le radiateur de chauffage en lui-même n'est pas à même de produire un flux d'air à température suffisante, notamment pendant la période de démarrage du moteur.

Dans un mode de réalisation préféré de l'invention, la cloison est disposée horizontalement, mais elle peut aussi être disposée obliquement. Dans les deux cas, le premier conduit est alors un conduit inférieur, tandis que le second conduit est alors un conduit supérieur.

Dans un autre mode de réalisation, la cloison est disposée verticalement, le premier conduit et le second conduit étant alors disposés l'un à droite et l'autre à gauche, c'est à dire du côté droit et du côté gauche du boîtier.

L'unité de production d'air froid du dispositif de l'invention comprend avantageusement un pulseur d'air agencé pour envoyer un flux d'air au travers d'un évaporateur afin de produire un flux d'air froid, l'unité de production d'air froid étant reliée à une entrée d'air débouchant dans le premier conduit du boîtier.

Dans l'invention, les sorties d'air sont avantageusement aménagées pour alimenter des aérateurs de planche de bord, des buses de dégivrage/désembuage du pare-brise, et des buses inférieures débouchant en partie inférieure de l'habitacle.

Le boîtier est avantageusement formé de deux demi-coques assemblées entre elles en enfermant la cloison. Les deux demi coques sont de préférence formées chacune en une matière choisie parmi les matières polymères, les matières composites et les matières métalliques.

Selon encore une autre particularité de l'invention, le boîtier est avantageusement aménagé pour être intégré dans une planche de bord de véhicule automobile.

Dans la description qui suit, faite seulement à titre d'exemples, on se réfère aux dessins annexés sur lesquels :
- la figure 1 est une vue en perspective éclatée d'un dispositif de chauffage-ventilation et/ou climatisation de l'habitacle d'un véhicule automobile, selon une première forme de réalisation de l'invention comportant deux radiateurs de chauffage ;
- la figure 2 est une vue schématique en coupe longitudinale du dispositif de la figure 1 illustrant la circulation des flux d'air ;
- la figure 3 est une vue en perspective éclatée d'une extrémité du boîtier du dispositif des figures 1 et 2 ;
- la figure 4 est une vue en perspective éclatée d'un dispositif selon une deuxième forme de réalisation de l'invention, comportant un seul radiateur de chauffage ;
- la figure 5 est une vue en coupe schématique du dispositif de la figure 4 illustrant la circulation des flux d'air ;
- la figure 6 est une vue en perspective éclatée d'un module d'aération ;
- la figure 7 est une vue en coupe d'un boîtier d'un dispositif selon l'invention ;
- la figure 8 est une vue éclatée d'un dispositif selon l'invention, à un seul radiateur de chauffage, comportant des volets de mixage non intégrés ; et
- la figure 9 est une vue éclatée d'un dispositif selon l'invention, comportant un seul radiateur de chauffage, et ayant des volets de mixage intégrés.

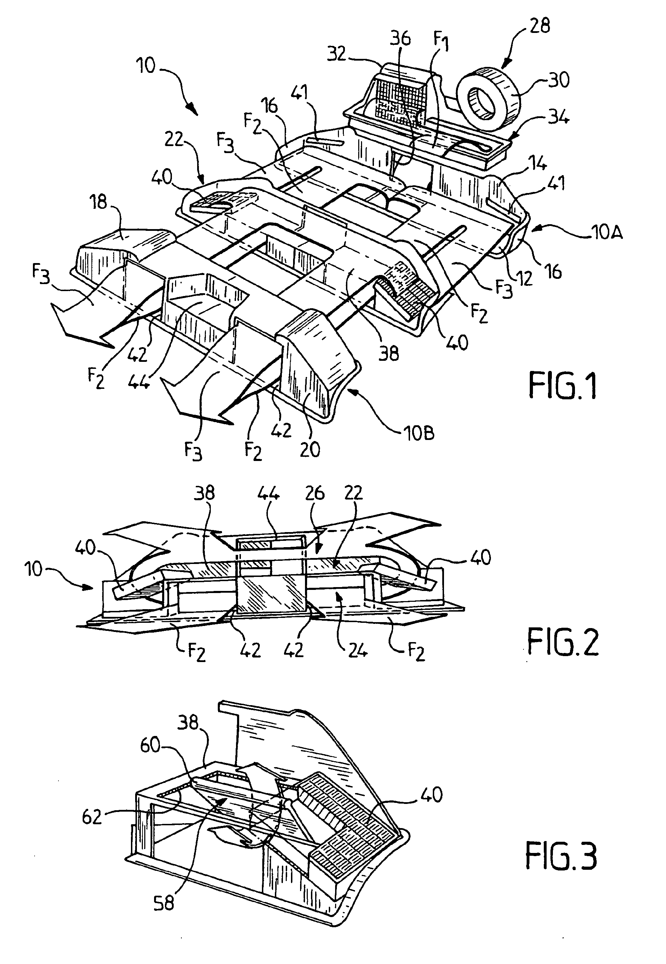

Le dispositif de chauffage-ventilation et/ou climatisation de l'habitacle d'un véhicule automobile, tel que représenté à la figure 1, comprend un boîtier 10 de forme allongée propre à être implanté transversalement et horizontalement à l'avant de l'habitacle d'un véhicule automobile. Ce boîtier est, dans l'exemple, formé de deux demi-coques : une demi-coque inférieure 10A et une demi-coque supérieure 10B. La demi-coque inférieure 10A comprend essentiellement une paroi inférieure 12, une paroi antérieure 14 et deux parois d'extrémité 16. La demi-coque 10B comprend essentiellement une paroi supérieure 18 et une paroi postérieure 20.

Lorsque les demi-coques 10A et 10B sont assemblées, elles définissent un boîtier de forme générale parallélépipédique allongée, s'étendant dans la direction horizontale et transversale du véhicule. Ce boîtier peut être logé dans tout ou partie de la planche de bord (non représentée) du véhicule. La paroi antérieure 14 est alors dirigée vers l'avant du véhicule, c'est-à-dire vers le compartiment moteur, tandis que la paroi postérieure 20 est alors dirigée vers l'arrière du véhicule, s'est-à-dire vers l'habitacle.

Entre les demi-coques 10A et 10B, est installée, lors du montage, une cloison 22, qui définit deux conduits superposés s'étendant tous deux sur toute la longueur du boîtier. Ces conduits comprennent un premier conduit 24 (ou conduit infé rieur) et un second conduit 26 (ou conduit supérieur) que l'on voit mieux sur la figure 2.

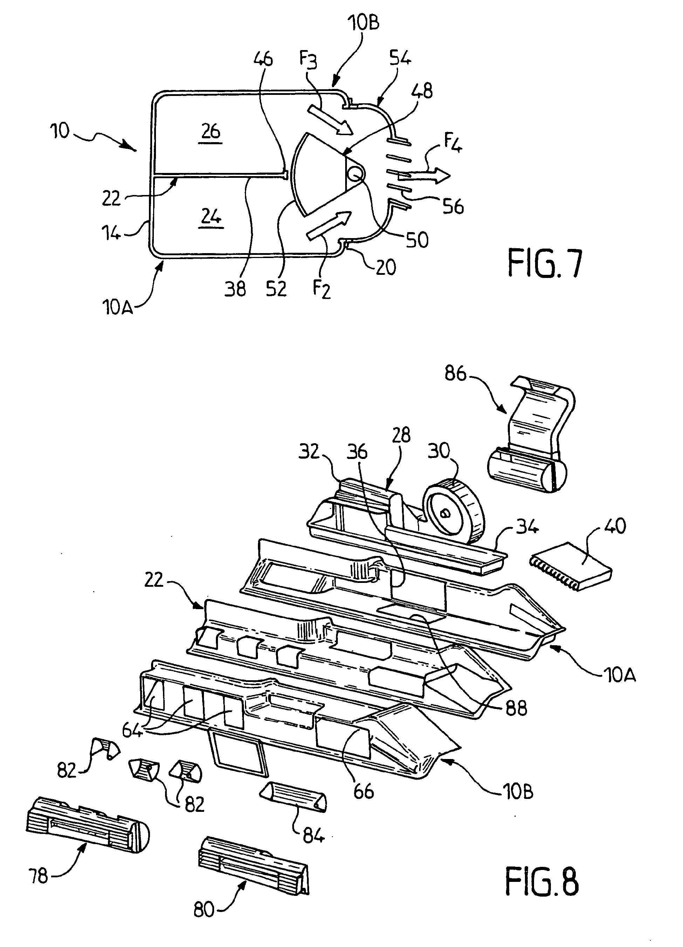

La figure 7 montre aussi comment le boîtier 10 est divisé, sur toute la longueur, par l'intermédiaire de la cloison 22 pour constituer les conduits 24 et 26 précités.

Le conduit inférieur 24 est alimenté en air froid par une unité de production d'air froid désignée, dans son ensemble, par la référence 28 (figure 1). Cette unité comprend un pulseur d'air 30, encore appelée soufflante, alimenté par de l'air extérieur prélevé hors de l'habitacle et/ou par de l'air recirculé prélevé à l'intérieur de l'habitacle. Ce flux d'air est envoyé au travers d'un évaporateur 32 relié à un circuit classique de climatisation (non représenté). Ceci permet de produire un flux d'air froid ou réfrigéré qui est reçu dans un carter 34 de forme allongée placée le long de la paroi antérieure 14 de la demi-coque 10A. Le flux d'air froid pénètre dans le boîtier 10 du dispositif au travers d'une ouverture 36 aménagée dans la paroi 14 pour parvenir dans le conduit inférieur 24 comme représenté par la flèche F1.

La cloison 22 comporte pour l'essentiel une paroi 38 qui s'étend horizontalement, dans l'exemple de réalisation, et qui est interrompue à ses deux extrémités pour définir deux logements ou ouvertures recevant respectivement deux radiateurs de chauffage 40 disposés tous deux en position légèrement oblique par rapport à l'horizontale. Ces radiateurs ont pour fonction de chauffer une partie au moins du flux d'air prélevée dans le conduit inférieur 24 pour produire un flux d'air chaud qui est envoyé dans le conduit supérieur 26. Ces deux radiateurs de chauffage sont introduits par des fentes oblongues 41 aménagées dans la paroi 14 de la demi coque 10A.

Ces radiateurs de chauffage peuvent être de différents types.

Dans un premier cas, le radiateur est agencé pour produire un flux d'air chaud à température non réglable. L'exemple typique est celui d'un échangeur de chaleur traversé en permanence par un fluide chaud, habituellement le fluide de refroidissement du moteur. En ce cas, la température du flux d'air envoyée dans l'habitacle est réglée en mélangeant, en proportion variable, un flux d'air froid n'ayant pas traversé le radiateur de chauffage et un flux d'air chaud ayant traversé le radiateur de chauffage. Il est nécessaire, en ce cas, de prévoir à chaque fois un volet dit "volet de mixage", pour ajuster cette température, comme on le verra plus loin.

Dans un deuxième cas, le radiateur de chauffage est agencé pour produire un flux d'air chaud à température réglable. L'exemple typique est celui d'un échangeur de chaleur traversé par un fluide chaud à débit réglable, en particulier par le liquide de refroidissement du moteur du véhicule. En ce cas, on prévoit un robinet de réglage qui permet d'ajuster le débit du fluide chaud qui traverse le radiateur de chauffage, ce qui permet de régler directement la température du flux d'air chaud, sans avoir besoin de volet de mixage.

Comme on le voit sur la figure 1, la paroi postérieure 20 de la demi-coque 10B comporte deux ouvertures 42, formant des sorties d'air, placées respectivement à droite et à gauche pour permettre la diffusion d'un flux d'air à température ajustée à l'intérieur de l'habitacle. Entre les deux ouvertures, la paroi postérieure 20 et la paroi supérieure 18 définissent une partie en retrait 44 pouvant servir, par exemple, de logement à un panneau de commande (non représenté).

La circulation des flux d'air à l'intérieur du boîtier 10 s'effectue en différentes nappes représentées schématiquement sur les figures 1 et 2. Le flux d'air froid (flèche F1), pénétrant dans le conduit inférieur 24 se partage de chaque côté (côté droit et côté gauche) en deux flux ou nappes, à savoir un flux d'air froid (comme représenté par les flèches F2) qui gagne directement les parties inférieures des ouvertures 42 et un flux d'air chaud (comme représenté par les flèches F3) qui traverse les deux radiateurs de chauffage 40 pour gagner la partie supérieure des ouvertures 42. Ainsi, chaque ouverture 42 est alimentée, en partie inférieure par un flux d'air froid F2 et en partie supérieure par un flux d'air chaud F3.

Comme on peut le voir sur la figure 7, la cloison 22, et notamment la paroi 38, s'étend depuis la paroi antérieure 14 du boîtier et possède un bord 46 situé à distance de la paroi postérieure 20 du boîtier. A l'interface du conduit inférieur 24 et du conduit supérieur 26, et devant chaque ouverture 42, est placé un volet de mixage 48. Dans l'exemple représenté sur la figure 7, le volet de mixage 48 est un volet de type tambour monté pivotant autour d'un axe horizontal 50 et comprenant une paroi cylindrique 52. On comprendra que chaque volet 48 peut, indépendamment de l'autre volet, être déplacé en position voulue pour ajuster la température du flux d'air résultant du mélange du flux d'air froid (flèche F2) et du flux d'air chaud (flèche F3). Chaque volet 48 peut occuper une position "chaud maximum" dans laquelle la paroi 52 obture la sortie du conduit inférieur 24 et une position "froid maximum" dans laquelle la paroi 52 obture la sortie du conduit supérieur 26.

Sur la figure 7, le volet 48 est représenté dans une position intermédiaire entre les deux positions extrêmes précitées, si bien que l'ouverture 42, formant sortie d'air, est alimentée conjointement par le flux d'air froid et le flux d'air chaud pour produire un flux d'air F4 à température ajustée. Ce flux d'air F4 traverse un module de diffusion d'air 54 comportant un volet de distribution 56 permettant de régler le débit et/ou l'orientation du flux d'air F4.

Dans l'exemple représenté aux figures 1, 2 et 7, les volets de mixage 48 sont intégrés dans le boîtier. Il pourrait être possible, en variante, d'intégrer ces volets respectivement aux deux modules de diffusion 54.

Dans la forme de réalisation évoquée précédemment, les volets 48 sont intégrés à la cloison, cette dernière pouvant incorporer aussi des guides d'air (non représentés) permettant d'optimiser le fonctionnement aéraulique du dispositif.

Dans la forme de réalisation décrite précédemment, chaque radiateur de chauffage ne permet pas en lui-même d'ajuster la température du flux d'air chaud, la température désirée étant obtenue en mélangeant en proportion réglable, par l'intermédiaire des volets de mixage, un flux d'air froid et un flux d'air chaud.

En variante, il est possible d'utiliser un échangeur de chaleur traversé par un fluide chaud, à débit réglable, auquel cas les volets de mixage évoqués précédemment sont supprimés.

Dans le cas où des volets de mixage sont utilisés, on utilise avantageusement un volet de mixage pour chaque sortie d'air. Comme mentionné précédemment, ces volets de mixage peuvent être soit intégrés au boîtier du dispositif, soit à des modules de diffusion comportant également des volets de distribution pour piloter les différentes sorties d'air.

Les sorties d'air mentionnées précédemment comprennent essentiellement des aérateurs de planche de bord, c'est-à-dire des aérateurs alimentés par les ouvertures 42 aménagées dans la paroi postérieure 20. On peut prévoir aussi des conduits menant à chaque fois un flux d'air vers une buse placée en un endroit approprié de l'habitacle.

Ces buses peuvent inclure notamment des buses de dégivrage/désembuage du pare-brise, des buses débouchant vers la partie inférieure de l'habitacle, et vers l'avant, pour envoyer de l'air vers les pieds des passagers.

On peut prévoir aussi des alimentations pour d'autres sorties pour envoyer un flux d'air à température ajustée vers une ou plusieurs zones à l'arrière de l'habitacle.

Dans tous les cas, les volets de mixage doivent être situés dans une zone d'interface entre le conduit inférieur 24 qui achemine de l'air froid et le conduit supérieur 26 qui achemine de l'air chaud. Ces volets de mixage vont, proportionnellement à leur position angulaire, autoriser une sortie proportionnelle des flux d'air chaud et d'air froid qui se mélangent immédiatement après, de façon à délivrer une température homogène correspondant à la consigne de commande.

Dans l'exemple de la figure 1, deux radiateurs de chauffage 40 sont implantés respectivement aux extrémités gauche et droite du dispositif. Ces radiateurs de chauffage peuvent être complétés, chacun, par un radiateur de chauffage additionnel (non représenté) par exemple du type à résistances à coefficient de température positif (résistances CTP). Ces résistances additionnelles sont susceptibles de procurer un chauffage d'appoint, notamment pendant la phase de démarrage du moteur du véhicule, lorsque les radiateurs de chauffage 40 n'ont pas atteint leur température optimale.

Le dispositif de la figure 1 peut comporter en outre au moins un volet d'équilibrage 58 (figure 3) placé dans le conduit inférieur 24 et à proximité d'un radiateur de chauffage 40, ici celui placé du côté droit. Le volet d'équilibrage 58 est monté pivotant autour d'un axe horizontal 60 et à l'intérieur d'une couverture 62 aménagée dans la paroi 38 de la cloison 22. Sa fonction est d'améliorer l'équilibrage entre le flux d'air froid et le flux d'air chaud. L'utilisation d'un tel volet d'équilibrage convient essentiellement à un mode de réalisation utilisant un seul radiateur de chauffage.

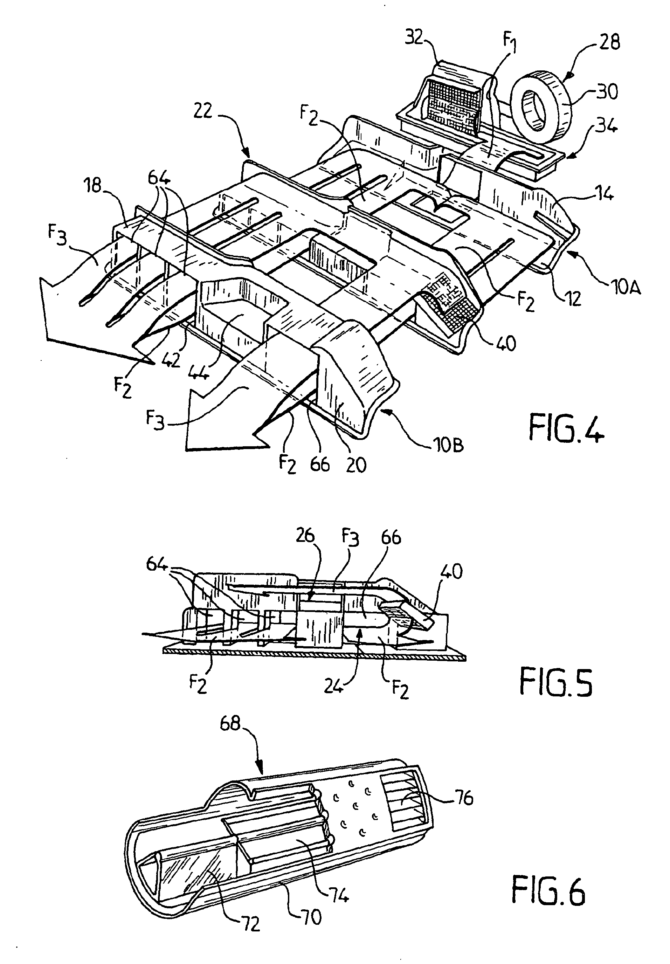

Un tel mode de réalisation est représenté précisément sur la figure 4. Le dispositif de la figure 4 s'apparente à celui de la figure 1 et les mêmes éléments sont désignés par les mêmes références numériques. La différence principale réside dans le fait que le dispositif comprend un seul radiateur de chauffage 40 placé ici du côté droit du boîtier.

Par ailleurs, la paroi postérieure 20 de la demi-coque 10b est aménagée différemment. Elle comporte ici trois ouvertures ou sorties d'air 64 placées du côté gauche et une ouverture 66 placée du côté droit. Comme dans la forme de réalisation de la figure 1, chacune des ouvertures 64 et l'ouverture 66 est située à l'interface du conduit inférieur 24 et du conduit supérieur 26 et elle est alimentée par un flux d'air froid F2 et par un flux d'air chaud F3. Là aussi, des volets de mixage sont prévus pour ajuster à chaque fois la température du flux d'air au travers de chacune des sorties d'air.

La circulation des flux d'air est illustrée aussi sur la figure 5. On y distingue une nappe correspondant au flux d'air froid F2 et une autre nappe correspondant au flux d'air chaud F3.

La figure 6 à laquelle on se réfère maintenant, montre un module de diffusion d'air 68 destiné à être implanté extérieurement sur le boîtier 10 et qui est réalisé différemment du module de diffusion d'air 54 de la figure 7.

Le module 68 comprend un boîtier 70 de forme générale cylin drique communiquant avec une ouverture ou sortie d'air aménagée dans la paroi postérieure 20 du boîtier 10. Le module 68 loge au moins un volet de mixage 72 analogue au volet de mixage 48 de la figure 7, la différence étant que le volet de mixage 72 est ici intégré au module 68. Ce module intègre en outre un volet de distribution 74 réalisé ici sous la forme d'un volet du type papillon. Le module 68 comprend en outre une ou plusieurs grilles 76 pour diffuser l'air à température réglée dans l'habitacle.

Le dispositif de la figure 8 constitue une variante de celui de la figure 4 dans lequel les volets de mixage ne sont pas intégrés au boîtier.

En effet, ceux-ci sont intégrés dans deux modules de distribution, à savoir un module de distribution 78 placé du côté gauche et un module de distribution 80 placé du côté droit. Le module 78 intègre trois volets de mixage 82 correspondant respectivement aux trois ouvertures 64 de la figure 4 et un volet de mixage 84 correspondant à l'ouverture 66 de la figure 4. On remarquera que le dispositif de la figure 8 comprend en outre un module 86 de diffusion arrière propre à être relié à une ouverture 88 aménagée dans la paroi inférieure 12 du boîtier 10. Ce module 86 est destiné à envoyer un flux d'air à température ajustée vers l'arrière de l'habitacle.

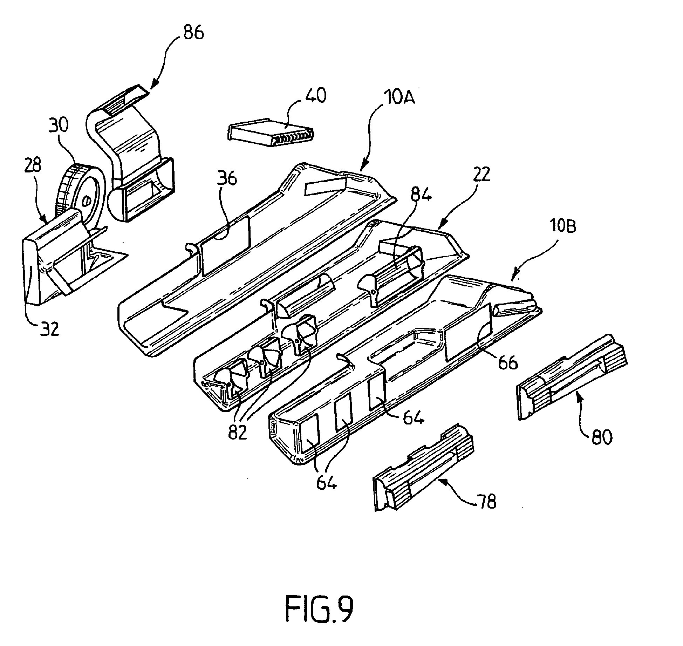

Le dispositif de la figure 9 constitue une variante de celui de la figure 8. La différence principale réside dans le fait que les volets de mixage sont ici intégrés au boîtier et, plus particulièrement à la cloison 22. On distingue les trois volets 82 et le volet 84 porté par la cloison.

En revanche, les modules de diffusion d'air 78 et 80 comportent seulement des volets de distribution (non représentés sur la figure 9).

Les deux demi-coques 10A et 10B sont avantageusement réalisées en une matière choisie parmi les matières polymères, les matières composites et les matières métalliques. Le dispositif de l'invention est susceptible de nombreuses variantes de réalisation. Il peut s'intégrer facilement au moins en partie dans une planche de bord de véhicule automobile.

Dans les exemples de réalisation décrits, la cloison 22 a été présentée comme étant horizontale. Il entre cependant aussi dans le cadre de l'invention de la disposer obliquement ou bien verticalement, à condition de définir un premier conduit et un deuxième conduit tels que décrits précédemment.

De même le ou les radiateurs de chauffage ne sont pas nécessairement placés en extrémité du boîtier et peuvent en variante être placés en position centrale ou sensiblement centrale, à condition d'être traversés par le flux d'air à chauffer.

## Revendications

1. Dispositif de chauffage-ventilation et/ou climatisation de l'habitacle d'un véhicule automobile,
**caractérisé en ce qu'**il comprend un boîtier (10) de forme générale allongée propre à être implanté à l'avant de l'habitacle, une cloison (22) agencée dans le boîtier pour y définir un premier conduit (24) et un second conduit (26) s'étendant entre les deux extrémités du boîtier, une unité de production d'air froid (28) agencée pour produire un flux d'air froid et l'envoyer dans le premier conduit (24), au moins un radiateur de chauffage (40) placé à l'interface du premier conduit (24) et du second conduit (26) et agencé pour être traversé par une partie au moins du flux d'air froid et produire ainsi un flux d'air chaud dans le second conduit (26), des sorties d'air (42) aménagées dans le boîtier à l'interface du premier conduit et du second conduit, et des volets de distribution (56 ; 68 ; 82, 84) associés aux sorties d'air.

2. Dispositif selon la revendication 1, **caractérisé en ce qu'**il comprend un seul radiateur de chauffage (40) placé à une extrémité du boîtier (10).

3. Dispositif selon la revendication 1, **caractérisé en ce qu'**il comprend un seul radiateur de chauffage (40) placé en position centrale dans le boîtier (10).

4. Dispositif selon l'une des revendications 2 et 3, **caractérisé en ce qu'**il comprend en outre au moins un volet d'équilibrage (58) placé dans le premier conduit (24) et à proximité du radiateur de chauffage (40) pour améliorer l'équilibrage entre le flux d'air froid et le flux d'air chaud.

5. Dispositif selon la revendication 1, **caractérisé en ce qu'**il comprend deux radiateurs de chauffage (40) placés aux deux extrémités du boîtier (10).

6. Dispositif selon la revendication 1, **caractérisé en ce qu'**il comprend deux radiateurs de chauffage (40) placés en position centrale dans le boîtier (10).

7. Dispositif selon l'une des revendications 1 à 6, **caractérisé en ce que** le radiateur de chauffage (40) est agencé pour produire un flux d'air chaud à température non réglable, et **en ce qu'**au moins un volet de mixage (48 ; 72) est placé devant les sorties d'air à l'interface entre le premier conduit (24) et le second conduit (26) pour ajuster la proportion entre le flux d'air froid et le flux d'air chaud et produire un flux d'air à température ajustée aux différentes sorties.

8. Dispositif selon la revendication 7, **caractérisé en ce que** l'un au moins des volets de mixage (48 ; 72) est intégré dans le boîtier (10).

9. Dispositif selon la revendication 7, **caractérisé en ce que** l'un au moins des volets de mixage (48 ; 72) est intégré à un module de diffusion d'air (54 ; 68 ; 78, 80) rapporté extérieurement sur le boîtier (10) et intégrant un volet de distribution (56 ; 74).

10. Dispositif selon l'une des revendications 7 à 9, **caractérisé en ce que** le radiateur de chauffage (40) est un échangeur de chaleur traversé par un fluide chaud, en particulier par le liquide de refroidissement du moteur du véhicule.

11. Dispositif selon l'une des revendications 1 à 6, **caractérisé en ce que** le radiateur de chauffage (40) est agencé pour produire un flux d'air chaud à température réglable.

12. Dispositif selon la revendication 11, **caractérisé en ce que** le radiateur de chauffage est un échangeur de chaleur traversé par un fluide chaud, à débit réglable, en particulier par le liquide de refroidissement du moteur du véhicule.

13. Dispositif selon l'une des revendications 10 et 12, **caractérisé en ce qu'**un radiateur additionnel comportant des résistances à coefficient de température positif est placé à proximité du radiateur de chauffage (40).

14. Dispositif selon l'une des revendications 1 à 13, **caractérisé en ce que** la cloison (22) est disposée horizontalement.

15. Dispositif selon l'une des revendications 1 à 13, **caractérisé en ce que** la cloison (22) est disposée obliquement.

16. Dispositif selon l'une des revendications 14 et 15, **caractérisé en ce que** le premier conduit (24) est un conduit inférieur, tandis que le second conduit (26) est un conduit supérieur.

17. Dispositif selon l'une des revendications 1 à 13, **caractérisé en ce que** la cloison (22) est disposée verticalement et **en ce que** le premier conduit (24) et le second conduit (26) sont disposés l'un à droite et l'autre à gauche.

18. Dispositif selon l'une des revendications 1 à 17, **caractérisé en ce que** l'unité de production d'air froid (28) comprend un pulseur d'air (30) agencé pour envoyer un flux d'air au travers d'un évaporateur (32) afin de produire un flux d'air froid, l'unité de production d'air froid étant reliée à une entrée d'air (36) débouchant dans le premier conduit (24) du boîtier (10).

19. Dispositif selon l'une des revendications 1 à 18, **caractérisé en ce que** les sorties d'air (42 ; 64, 66), sont aménagées pour alimenter des aérateurs de planche de bord, des buses de dégivrage/désembuage du pare-brise et des buses inférieures débouchant en partie inférieure de l'habitacle.

20. Dispositif selon l'une des revendications 1 à 19, **caractérisé en ce que** le boîtier est formé de deux demi-coques (10A, 10B) assemblées entre elles en enfermant la cloison (22).

21. Dispositif selon la revendication 20, **caractérisé en ce que** les deux demi-coques (10A, 10B) sont formées chacune en une matière choisie parmi les matières polymères, les matières composites et les matières métalliques.

22. Dispositif selon l'une des revendications 1 à 21, **caractérisé en ce que** le boîtier (10) est agencé pour être intégré dans une planche de bord de véhicule automobile.

## Claims

1. Heating - ventilation and / or air conditioning device for the compartment of an automotive vehicle,
**characterised in that** it comprises a housing (10) of a generally elongated form suitable to be installed in the compartment, a partition wall (22) fitted in the housing to create a first duct (24) and a second duct (26) extending between the two ends of the housing, a cold air production unit (28) fitted so as to produce a cold air flow to be sent into the first duct (24), at least on heating radiator (40) positioned at the interface of the first duct (24) and the second duct (26) and fitted so that it is traversed by at least part of the cold air flow and thus producing a flow of hot air in the second duct (26), air outlets (42) fitted in the housing at the interface of the first duct and the second duct, and distribution flaps (56, 68, 82, 84) associated to the air outlets.

2. Device of claim 1, **characterised in that** it comprises a single heating radiator (40) positioned at one end of the housing (10).

3. Device of claim 1, **characterised in that** it comprises a single heating radiator (40) positioned in the centre of the housing (10).

4. Device of any of claims 2 and 3, **characterised in that** it comprises among others at least one balancing flap (58) positioned in the first duct (24) and close to the heating radiator (40) to improve the balance between the cold air flow and the hot air flow.

5. Device of claim 1, **characterised in that** it comprises two heating radiators (40) positioned at the two ends of the housing (10).

6. Device of claim 1, **characterised in that** it comprises two heating radiators (40) positioned in the centre of the housing (10).

7. Device of any of claims 1 to 6, **characterised in that** the heating radiator (40) is fitted so that it produces a flow of hot air at a non-adjustable temperature, and **in that** at least one mixing flap (48, 72,) is positioned in front of the air outlets at the interface between the first duct (24) and the second duct (26) to adjust the proportion between the cold air flow and the hot air flow and to produce an air flow at an adjusted temperature at the various outlets.

8. Device of claim 7, **characterised in that** at least one of the mixing flaps (48, 72) is integrated into the housing (10).

9. Device of claim 7, **characterised in that** at least one of the mixing flaps (48, 72) is integrated into an air diffusion module (54, 68, 78, 80) fitted externally onto the housing (10) and incorporating a distribution flap (56, 74).

10. Device of any of claims 7 to 9, **characterised in that** the heating radiator (40) is a heat exchanger traversed by a hot fluid, in particular by the cooling fluid of the vehicle's engine.

11. Device of any of claims 1 to 6, **characterised in that** the heating radiator (40) is fitted to provide a hot air flow at an adjustable temperature.

12. Device of claim 11, **characterised in that** the heating radiator is a heat exchanger traversed by a hot fluid, at an adjustable flow rate, in particular by the cooling fluid of the vehicle's engine.

13. Device of any of claims 10 and 12, **characterised in that** an additional radiator comprising positive temperature coefficient resistors is positioned close to the heating radiator (40).

14. Device of any of claims 1 to 13, **characterised in that** the partition wall (22) is positioned horizontally.

15. Device of any of claims 1 to 13, **characterised in that** the partition wall (22) is positioned obliquely.

16. Device of any of claims 14 and 15, **characterised in that** the first duct (24) is a lower duct, whereas the second duct (26) is an upper duct.

17. Device of any of claims 1 to 13, **characterised in that** the partition wall (22) is positioned vertically and **in that** the first duct (24) and the second duct (26) are positioned one on the left and one on the right.

18. Device of any of claims 1 to 17, **characterised in that** the cold air production unit (28) comprises an air generating device (30) fitted so that it blows an air flow through an evaporator (32) in order to create a cold air flow, wherein the cold air production unit is connected to an air inlet (36) which opens out into the first duct (24) of the housing (10).

19. Device of any of claims 1 to 18, **characterised in that** the air outlets (42, 64, 66) are located so that they supply the dashboard air vents, the vents for windscreen, demisting/defrosting and the lower vents of the lower part of the compartment.

20. Device of any of claims 1 to 19, **characterised in that** the housing is formed by two half shells (10A, 10B) assembled together and containing the partition wall (2).

21. Device of claim 20, **characterised in that** the two half shells (10A, 10B) are each made of a material chosen from polymers, composite materials and metals.

22. Device of any of claims 1 to 21, **characterised in that** the housing (10) is fitted so that it can be incorporated into a dashboard of an automotive vehicle.

## Patentansprüche

1. Heizungs- Belüftungs- und/oder Klimaanlage für Fahrerhaus eines Kraftfahrzeugs,
**dadurch gekennzeichnet, dass** sie ein Gehäuse (10) umfasst, mit allgemein verlängerter Form, dass vorne im Fahrerhaus eingebaut werden kann, eine Trennwand (22), die in dem Gehäuse angeordnet ist, um dort eine erste Leitung (24) und eine zweite Leitung (26) festzulegen, die sich zwischen den beiden Enden des Gehäuses erstrecken, eine angeordnete Einheit zur Kaltlufterzeugung (28), um einen Kaltluftstrom zu erzeugen und ihn in die erste Leitung (24) zu führen, mindestens einen Heizkörper (40), der an der Schnittstelle der ersten Leitung (24) und der zweiten Leitung (26) positioniert ist und so angeordnet ist, um zumindest von einem Teil des Kaltluftstroms durchquert zu werden und auf diese Weise einen Warmluftstrom in der zweiten Leitung (26) zu erzeugen, Luftaustritte (42), die in dem Gehäuse, an der Schnittstelle der ersten Leitung und der zweiten Leitung angelegt sind und Verteilerklappen (56; 68; 82; 84), die mit den Luftaustritten verbunden sind.

2. Anlage gemäß Anspruch 1, **dadurch gekennzeichnet, dass** sie einen einzigen Heizkörper (40) umfasst, der an einem Ende des Gehäuses (10) positioniert ist.

3. Anlage gemäß Anspruch 1, **dadurch gekennzeichnet, dass** sie einen einzigen Heizkörper (40) umfasst, der in Mittelstellung in dem Gehäuse (10) angeordnet ist.

4. Anlage gemäß einem der Ansprüche 2 und 3, **dadurch gekennzeichnet, dass** sie außerdem mindestens eine Ausgleichsklappe (58) umfasst, die in der ersten Leitung (24) und in der Nähe des Heizkörpers (40) angeordnet ist, um den Ausgleich zwischen dem Kaltluftstrom und dem Warmluftstrom zu verbessern.

5. Anlage gemäß Anspruch 1, **dadurch gekennzeichnet, dass** sie zwei Heizkörper (40) umfasst, die an den beiden Enden des Gehäuses (10) positioniert sind.

6. Anlage gemäß Anspruch 1, **dadurch gekennzeichnet, dass** sie zwei Heizkörper (40) umfasst, die in Mittelstellung in dem Gehäuse (10) angeordnet sind.

7. Anlage gemäß einem der Ansprüche 1 bis 6, **dadurch gekennzeichnet, dass** der erste Heizkörper (40) so angeordnet ist, dass er einen Warmluftstrom mit einer nicht einstellbaren Temperatur erzeugt und dadurch, dass mindestens eine Mischklappe (48; 72) vor den Luftaustritten, an der Schnittstelle zwischen der ersten Leitung (24) und der zweiten Leitung (26) positioniert ist, um das Verhältnis zwischen dem Kaltluftstrom und dem warmluftstrom zu regulieren und einen Luftstrom mit regulierter Temperatur an den unterschiedlichen Ausgängen zu erzeugen.

8. Anlage gemäß Anspruch 7, **dadurch gekennzeichnet, dass** zumindest eine der Mischklappen (48; 72) in das Gehäuse (10) eingebaut ist.

9. Anlage gemäß Anspruch 7, **dadurch gekennzeichnet, dass** zumindest eine der Mischklappen (48; 72) in ein Luftverbreitungsmodul (54; 68; 78; 80) eingebaut ist, das außen auf das Gehäuse (10) aufgesteckt ist und in das eine Verteilerklappe (56; 74) eingebaut ist.

10. Anlage gemäß einem der Ansprüche 7 bis 9, **dadurch gekennzeichnet, dass** der Heizkörper (40) ein Wärmetauscher ist, durch den eine warme Flüssigkeit fließt, insbesondere ein Kühlmittel für den Kraftfahrzeugmotor.

11. Anlage gemäß einem der Ansprüche 1 bis 6, **dadurch gekennzeichnet, dass** der Heizkörper (40) so angeordnet ist, um einen Warmluftstrom mit einer einstellbaren Temperatur zu erzeugen.

12. Anlage gemäß Anspruch 11, **dadurch gekennzeichnet, dass** der Heizkörper ein Wärmetauscher ist, durch den eine warme Flüssigkeit fließt, mit einer einstellbaren Durchflussmenge, insbesondere ein Kühlmittel für den Kraftfahrzeugmotor.

13. Anlage gemäß einem der Ansprüche 10 bis 12, **dadurch gekennzeichnet, dass** ein zusätzlicher Heizkörper, der Widerstände mit einem positiven Temperaturkoeffizienten umfasst, in der Nähe des Heizkörpers (40) positioniert ist.

14. Anlage gemäß einem der Ansprüche 1 bis 13, **dadurch gekennzeichnet, dass** die Trennwand (22) horizontal angeordnet ist.

15. Anlage gemäß einem der Ansprüche 1 bis 13, **dadurch gekennzeichnet, dass** die Trennwand (22) schräg angeordnet ist.

16. Anlage gemäß einem der Ansprüche 14 und 15, **dadurch gekennzeichnet, dass** die erste Leitung (24) eine untere Leitung ist, wohingegen die zweite Leitung (26) eine obere Leitung ist.

17. Anlage gemäß einem der Ansprüche 1 bis 13, **dadurch gekennzeichnet, dass** die Trennwand (22) senkrecht angeordnet ist und dadurch, dass die erste Leitung (24) rechts und die zweite Leitung (26) links angeordnet ist.

18. Anlage gemäß einem der Ansprüche 1 bis 17, **dadurch gekennzeichnet, dass** die Einheit zur Kaltlufterzeugung (28) einen Lüfter (30), der so angeordnet ist, um einen Luftstrom durch einen Verdampfer (32) zu leiten, um einen Kaltluftstrom zu erzeugen, wobei die Einheit zur Kaltlufterzeugung mit einem Lufteintritt (36) verbunden ist, der in die erste Leitung (24) des Gehäuses (10) mündet.

19. Anlage gemäß einem der Ansprüche 1 bis 18, **dadurch gekennzeichnet, dass** die Luftaustritte (42; 64; 66) so angeordnet sind, um Belüftungsschlitze des Armaturenbrettes, Düsen zur Enteisung/Düsen gegen Beschlagen der Windschutzscheibe und untere Düsen, die in den unteren Teil des Fahrerhauses münden, Luft zuzuführen.

20. Anlage gemäß einem der Ansprüche 1 bis 19, **dadurch gekennzeichnet, dass** das Gehäuse aus zwei halben selbsttragenden Karosserien (10A, 10B) besteht, die miteinander verbunden sind und die Trennwand (22) umgeben.

21. Anlage gemäß Anspruch 20, **dadurch gekennzeichnet, dass** die beiden selbsttragenden Karosserien (10A, 10B) jeweils aus einem Material bestehen, das aus der Gruppe der Polymere, Verbundstoffe und Metalle ausgewählt wurde.

22. Anlage gemäß einem der Ansprüche 1 bis 21, **dadurch gekennzeichnet, dass** das Gehäuse (10) so angeordnet ist, dass es in das Armaturenbrett eines Kraftfahrzeugs eingebaut werden kann.
